# EUROPEAN PATENT APPLICATION

(11) **EP 4 686 505 A1**
(43) Date of publication of application: **04.02.2026**
(21) Application number: 24382858.9
(22) Date of filing: 01.08.2024
(51) Int. Cl.: B01J 21/06, B01J 35/39, B01J 37/02, C01B 3/04, C01B 13/02, C25B 1/55, B01J 21/10, B01J 23/52, B01J 35/45

(54) **SYSTEM SUITABLE FOR PHOTOCATALYSIS AND METHOD TO PRODUCE SUCH SYSTEM**

(71) Applicant: Universitat Politècnica De Catalunya, 08034 Barcelona (ES)
(72) Inventor: ANGLADA AULET, Miquel, 08570 TORELLÓ (ES); LLORCA PIQUÉ, Jordi, 08022 BARCELONA (ES); PUIGDOLLERS GONZALEZ, Joaquim, 08440 CARDEDEU (ES); SEGURA BLANCH, Oriol, 08028 BARCELONA (ES); SOLER TURU, Lluis, 08174 SANT CUGAT DEL VALLÈS (ES)
(74) Representative: Torner, Juncosa I Associats, SL

(57) **Abstract**

The present disclosure relates to a system suitable for photocatalysis comprising a semiconductor and selective contacts, the selective contacts being at least two, wherein the selective contacts are attached to the semiconductor; and the selective contacts comprise an electron transport layer and a hole transport layer. It also relates to a method to produce a system suitable for photocatalysis comprising the steps of: providing a sol-gel precursor of the semiconductor; dissolving the sol-gel precursor in a polar solvent; adding acid to the dissolution and stirring the dissolution to obtain a sol of the semiconductor; depositing the semiconductor in a suitable substrate; submitting the deposited semiconductor to a temperature of at least 300 °C for at least 1 hour to obtain a thin film of semiconductor; depositing on the semiconductor an electron transport layer and/or a hole transport layer. The present disclosure also relates to a method to obtain hydrogen from water or alcohol comprising the steps of contacting the system defined with water and/or alcohol, and irradiating the system as defined with light.

## Description

### TECHNICAL FIELD

The present disclosure relates to a system suitable for photocatalysis, a method to obtain such a system and a method to obtain hydrogen from water or alcohol.

### BACKGROUND ART

Photocatalysis is defined as the acceleration of chemical reactions under illumination and in the presence of a photocatalyst. In general, two chemical reactions occur in photocatalytic systems, one of oxidation and the other of reduction, which are involved in the chemical transformation of compounds present in their environment. The final objective is the creation of substances that have technological interest, among which it can be mentioned the generation of hydrogen and hydrocarbons, or the elimination of polluting compounds. One of the technological applications of great interest at an environmental level is the generation of hydrogen from water, the process of splitting water. As the lighting comes from the Sun, a clean and sustainable energy source, this process is considered a green technology.

For the occurrence of the chemical reactions of reduction and oxidation, carriers of electric charge (electrons and holes) with sufficient energy are needed. These electrons and holes are photogenerated in a semiconductor, in which the energetic position of the band gap will largely determine the final energy of the carriers. The energy distribution of these electrons and holes is measured by their electrochemical potential (or Fermi level). In optimal situations, the equilibration of these excess charge through an external circuit (electrolyte) will cause chemical reactions to occur.

The efficiency of photocatalytic systems is limited by poor charge-separation processes and by the recombination of electrons and holes before they have participated in the reaction. This process is aggravated by the nanoscale geometry of many of the compounds that are used as light absorbers, as well as by the multi-redox reactions at the coevolving surface sites. For this reason, an important part of the research in photocatalysis aims to reduce or annul said recombination.

The different technological strategies that are studied to reduce recombination are summarized in two large groups. On the one hand, there is the strategy of generating physically separated electrons and holes, which reduces their capture section, increasing the diffusion length, and therefore the lifetime of the photogenerated carriers. The other strategy focuses on diminishing, eliminating in the best of cases, the possible recombination paths existing between the photogenerated carriers. This translates into obtaining a semiconductor without electronic states (traps, defects, dangling bonds...) inside the gap of the material. Due to the nanostructured geometry that most of the absorber materials used in photocatalysis present, this is quite a challenge.

In photocatalysis, different strategies are used to make the reductive and oxidative sites physically separate.

One of the most used ways in photocatalysis is through the creation of energy barriers, which allow the passage of one type of charge carrier, while blocking the other, physically separating electrons and holes. These energy barriers are usually created from energy band bending at the contact interface of two compounds (semiconductor/semiconductor or metal/semiconductor).

These two compounds must have different electrochemical potential (Fermi levels). In equilibrium, the contact of these two non-metallic compounds will create a zone of space charge, generating a potential barrier to the flow of charge carriers. The creation of this selective contact, which is called pn junction in the particular case of two p-type and n-type semiconductors, has been widely used in the field of solar cells to achieve the separation of photogenerated carriers. A similar strategy is used in photocatalytic systems, and they are often called Z-schemes.

Energy barriers can also be generated with more complicated strategies. For example, through the synthesis of crystalline compounds, usually in the form of grains of hundreds of nm) in which the different crystalline facets have different work functions or through the use of metallic nanoparticles (cocatalysts) in contact with the semiconductor or by generating different phases, structural or compositional, of the same compound.

As mentioned, the creation of energy barriers at the interface between two compounds is the basis for the manufacture of photovoltaic solar cells. It is important to point out that the thickness of the space charge zone, present at the interface and where the electric field responsible for the separation of carriers is concentrated, is very thin, with thicknesses of tens or hundreds of nanometers. This thickness can be controlled by the doping level of the semiconductor, but it will always be small compared to the thickness required for significant absorption of incident light. In other words, the thickness of the space charge zone is much smaller than the thickness of the absorber where the carriers are photogenerated, which is generally microns thick, to absorb a large amount of light.

This thickness asymmetry has led to a misconception for many years when designing solar cells. Many laboratories made solar cells with only one energy barrier, the so-called pin junction. With this approach, the carriers are filtered on only one side of the absorber, forgetting the other, in which the recombination of carriers decreases the efficiency of the solar cell. This misconception has already been overcome in solar cells, and today no one disputes that a solar cell is made up of an absorber and two selective filters/contacts. These selective contacts called Electron (Hole) (ETL, HTL) allow the passage of one carrier blocking the other. With this approach, the probability of recombination of the photogenerated carriers is reduced.

The concept of absorber plus HTL and ETL is used to manufacture high-efficiency solar cells based on crystalline silicon. Crystalline silicon (c-Si) solar cells dominate the photovoltaic market, with photovoltaic modules that have an energy conversion efficiency of the order of 20-21%. Said modules use c-Si absorbers with the HTL and ETL contacts located on both faces of the absorber. However, the most efficient cells made of crystalline silicon (26.7%) [K. Yamamoto] are manufactured by using an interdigitated back-contacted (IBC) configuration. In an IBC solar cell geometry both contacts, the electron (ETL) and the hole (HTL) transport layers, are placed on the back of the device, in which the electrons and holes are generated on the same face but physically separated. With this structure, electrons and holes are efficiently separated, while the absorber surface is efficiently passivated, preventing their recombination.

For instance, US6333457 discloses a silicon solar cell comprising an intrinsic monocrystalline silicon chip having two opposing major surfaces, a plurality of n+ doped regions and p+ doped regions in one major surface, and a doped peripheral region around the periphery of the silicon chip and extending from one major surface to the other major surface, the peripheral region functioning as a passivation layer for repelling carriers and reducing recombination of carriers.

EP4099407A1 discloses a back contact structure of a solar cell, the back contact structure comprising: a silicon substrate, the silicon substrate comprising a back surface comprising a plurality of recesses disposed at intervals; a plurality of first conductive regions and a plurality of second conductive regions disposed alternately in the plurality of recesses, wherein each first conductive region comprises a first dielectric layer and a first doped region which are disposed successively in the plurality of recesses, and each second conductive region comprises a second doped region; a second dielectric layer disposed between the plurality of first conductive regions and the plurality of second conductive regions, wherein the second dielectric layer is at least one in number; and a conductive layer disposed on the plurality of first conductive regions and the plurality of second conductive regions.

WO19103570 discloses a charge selective junction solar cell comprising: a silicon substrate; a first tunnel passivation layer located on the front surface of the silicon substrate and capable of passing charges through tunneling; a second tunnel passivation layer located on a rear surface of the silicon substrate and capable of passing charges through tunneling; a hole selection junction layer located on the first tunnel passivation layer; an electron selection junction layer located on the second tunnel passivation layer; a first transparent conductive layer disposed on the hole-selective bonding layer; and a second transparent conductive layer disposed on the electron selection junction layer.

The use of the concepts of selective layers (HTL and ETL) might be valid for photocatalytic systems, allowing the generation of physically separated reduction and oxidation sites, favoring the desired chemical reactions before the photogenerated carriers recombine. However, the incorporation of selective contacts in photocatalytic systems accounts for large technological difficulties.

JP2010099609, for example, discloses a photocatalyst comprising a light absorber for receiving light and exciting an electric charge in response to the light; an energy selective contact formed in the circumference of the light absorber and extracting only the electric charge in prescribed energy levels among the electric charges excited by the light absorption body; and a reaction part joined to the energy selective contact and for receiving the electric charge extracted by the energy selective contact and causing a reaction.

Therefore, there is a need to obtain photocatalytic systems having improved charge-separation process that may, in turn, improve the efficiency of the photocatalytic reaction by decreasing their recombination ratio.

### SUMMARY OF THE DISCLOSURE

A first aspect of the present disclosure relates to a system suitable for photocatalysis comprising a semiconductor and selective contacts, the selective contacts being at least two, wherein the selective contacts are attached to the semiconductor; and the selective contacts comprise an electron transport layer and a hole transport layer.

A second aspect of the present disclosure relates to a method to produce a system suitable for photocatalysis comprising the steps of: providing a sol-gel precursor of a semiconductor; dissolving the sol-gel precursor in a polar solvent; adding acid to the dissolution and stirring the dissolution to obtain a sol of the semiconductor; depositing the semiconductor in a suitable substrate; submitting the deposited semiconductor to a temperature of at least 300 °C for at least 1 hour to obtain a thin film of semiconductor; and depositing on the semiconductor an electron transport layer and/or a hole transport layer.

A third aspect of the present disclosure relates to a method to obtain hydrogen from water or alcohol comprising the steps of contacting the system defined herein with water and/or alcohol and irradiating the system herein defined with light.

### BRIEF DESCRIPTION OF THE FIGURES

The foregoing and other advantages and features will be more fully understood from the following detailed description of an embodiment with reference to the accompanying drawings, to be taken in an illustrative and non-limitative manner, in which:
FIG. 1 shows a schematic representation of the system according to the disclosure: a semiconductor and two selective contacts, the hole transport layer and the electron transport layer.
FIG. 2 shows a schematic representation of a section of the embodiment of the system comprising subsequent and alternating selective contacts attached to the semiconductor.
FIG. 3 shows an equivalent embodiment as in FIG. 2 but with the peculiarity of a passivation layer between the semiconductor and the selective contacts.
FIG. 4 shows a schematic representation of a plant view of an alternative configuration of the system herein disclosed wherein the system comprises alternating selective contact layers disposed in between semiconductor layers.
FIG. 5 shows a schematic representation of a plant view of a further alternative embodiment of the system herein disclosed wherein a plurality of selective contacts are attached onto the semiconductor.
FIG. 6 shows a further representation of a plant view of the system herein disclosed wherein layers of the selective contacts, hole transport layers and electron transport layers, are attached onto the semiconductor in an alternating and overlapping manner.
FIG. 7 shows Scanning Electron Microscopy (SEM) images of a TiO₂ film, in two views: a far view (A) and closer and more detailed view (B).
FIG. 8 shows a SEM image of gold nanoparticles over TiO₂ (A), and the diameter distribution of gold nanoparticles (100 nanoparticles randomly chosen).
FIG. 9 shows SEM images of the TiO₂/Mg(full) + Au, having magnesium cracks over TiO₂, in two views: a far view (A) and a closer and more detailed view (B).
FIG. 10 shows a SEM image of the TiO₂/Mg (thin strips) + Au sample (A) and Energy Dispersive X-ray spectroscopy (EDX) gold map of the same sample and gold counts along the pattern (B).
FIG. 11 shows the production and peak production rate of hydrogen during the first two hours of reference samples and the low interdigitated system in different embodiments.
FIG. 12 shows the production rate evolution of hydrogen (A) and acetaldehyde (B) of the low interdigitation system in different embodiments.

### DESCRIPTION OF THE DISCLOSURE

The present disclosure relates to a system suitable for photocatalysis comprising a semiconductor and selective contacts, the selective contacts being at least two, wherein the selective contacts are attached to the semiconductor; and the selective contacts comprise an electron transport layer and a hole transport layer.

Photocatalysis is understood herein as the enhancement of a chemical reaction rate by the use of a catalyst, a photocatalyst, irradiated by a light source. This effect is possible because photocatalysts are semiconductors such that valence electrons are excited into the conduction band where the excited electrons can reduce the surface-adsorbed species.

A semiconductor, according to the IUPAC, is a material whose conductivity, due to charges of both signs, is normally in the range between that of metals and insulators and in which the electric charge carrier density can be changed by external means.

A selective contact, as understood herein, is a material that is able to separate energetically and spatially the charge carrier by reducing recombination rates of electrons, allowing that a greater part of the generated charge pairs to be consumed by an external circuit. Selective contacts have two functions: help the exit of a charge carrier type and block the way out of the other. Selective contacts are also known in the art as membranes, filters or transport layers. Normally selective contacts act as passivating layers such that they avoid the appearance of surface states and therefore avoid undesired Fermi level pining.

Selective contacts can be classified in electron transport layers (ETL) and hole transport layers (HTL).

Electron transport layers block the exit of holes from the semiconductor and help the way out for electrons.

Hole transport layers block the exit of electrons from the semiconductor and help the way out for holes.

The present disclosure also relates to a system wherein the electron transport layer and the hole transport layer are in opposite sides of the semiconductor to which they are attached.

The present disclosure also relates to a system wherein the electron transport layer and the hole transport layer are attached on the same side of the semiconductor to which they are attached.

In a particular embodiment, the selective contacts are a plurality of selective contacts comprising a combination of electron transport layers and a combination of hole transport layers.

The selective contacts may be disposed consecutively and alternating electron transport layers and hole transport layers. Multiple configurations might be designed, as shown in the Figures.

In relation to the nature of the particular elements of the system herein disclosed, the semiconductor may be preferably made of titanium dioxide, bismuth vanadate and/or combinations thereof.

The electron transport layer may be preferably made of magnesium oxide, zinc oxide, n-type doped amorphous silicon and/or combinations thereof.

The hole transport layer may be preferably made of platinum, gold, copper or transition-metal oxides, the transition metal oxide being preferably selected from the group consisting of molybdenum, vanadium and/or combinations thereof.

In a particular embodiment, the system herein disclosed may further comprise a passivation layer, the layer preferably being made of molecular dipoles, the molecular dipoles being thin-film molecular dipoles and/or selected from the group of molecules comprising amino groups.

The passivating layers, or dipolar films, act like concentrated localized charges that can be tuned depending on the needs and enhance the performance of ETL structures. These passivating layers might be made of amorphous doped silicon, amorphous silicon carbide or oxide structures like titanium dioxide combined with alumina. Those layers use very large organic molecules with very dipolar functional groups like amines. Some examples of organic molecules being dipolar films are polymers such as Poly [(9,9-bis(3'-(N,N-dimethylamino)propyl)-2,7-fluorene)-alt-2,7-(9,9-dioctylfluorene)] (PFN), polyethylenimide (PEI), Poytehtylenoxide (PEO) and Polyamidoamine (PAMAM).

The system herein disclosed allows the implementation in photocatalytic systems a strategy that is used in the manufacture of high efficiency solar cells. This strategy allows to increase the generation of physically separated electrons and holes (reducing and oxidative sites), increasing the efficiency of the system.

The present disclosure also relates to a method to produce a system suitable for photocatalysis, in particular for the system hereinabove disclosed. This method comprises the steps of: providing a sol-gel precursor of a semiconductor; dissolving the sol-gel precursor in a polar solvent; adding acid to the dissolution and stirring the dissolution to obtain a sol of the semiconductor; depositing the semiconductor in a suitable substrate; submitting the deposited semiconductor to a temperature of at least 300 °C for at least 1 hour to obtain a thin film of semiconductor; and depositing on the semiconductor an electron transport layer and/or a hole transport layer.

The semiconductor in the method may preferably be titanium dioxide. Titanium dioxide is one of the most widely used semiconductors in photocatalysis applications, since the position of the valence and conduction band allows the photogeneration of electrons and holes with electrochemical potentials suitable for water splitting.

The polar solvent may preferably be ethanol, the acid may preferably be hydrochloric acid.

The suitable substrate in the method may preferably be a silicon wafer. The silicon wafer may be covered with a thin film of a dielectric layer such as alumina or silica.

In the method herein disclosed, the electron transport layer is preferably a magnesium oxide film and/or the hole transport layer is preferably made of gold.

The use of gold is a widely used approach in photocatalytic systems to favor the injection of holes in the electrolyte, blocking in turn the injection of electrons. Its operating principle is based on the curvature of bands that appears at the TiO₂/Au interface and on the photogeneration of high-energy electrons and holes when the Au nanoparticle is illuminated with photons with energy similar to the plasmon resonance frequency. The use of Mg layers as electron selective contact is an approach used in the fabrication of solar cells as ETL contact.

The system as disclosed is a photocatalyst. For a photocatalyst to be able to catalyze a REDOX reaction, the generated charge carriers must be energetic enough. Electrons must react with the chemical species coming from a conduction band higher than the reduction potential of the reduction semireaction. Analogously, the excited holes must come from a valence band below the reduction potential of the oxidation semireaction.

Water splitting is the main goal of photocatalytic hydrogen production, because water is abundant, cheap and ecofriendly. One of the most used photocatalysts for water splitting is titanium dioxide, TiOz, because its great properties. First of all its bands allow it to catalyze this reaction, it can be greenly produced, biocompatible, non-toxic, antimicrobial, easily nanoengineered and it is widely used in other fields like paints and medicine. Titanium dioxide can adopt different crystalline structures. The three main ones are anatase, rutile and brookite. Between them, the band structure changes, but most importantly the band gap does too. Their band gaps are 3.2eV, 3eV and 3-3.2eV respectively. However, the most interesting for photocatalysis are anatase and rutile. The main difference when using it as an absorber is that rutile has a direct band gap while anatase band gap is indirect. It is known that the indirect band gap in anatase reduces the recombination rate and expands the carrier lifetime. The crystalline phase can be controlled with the temperature since anatase can be obtained at low temperatures but rutile starts forming at around 600°C.

The present disclosure relates, therefore, to a method to obtain hydrogen from water or alcohol comprising the steps of contacting the system herein defined with water and/or alcohol; and irradiating the system with light.

The alcohol in the present invention may preferably be ethanol, though other alcohols might be used as hydrogen sources.

The irradiation of the system once water or ethanol is in contact with the system herein disclosed may be a source of UV light.

### DETAILED DESCRIPTION OF PARTICULAR EMBODIMENTS

The system herein disclosed might be further understood by including several embodiments.

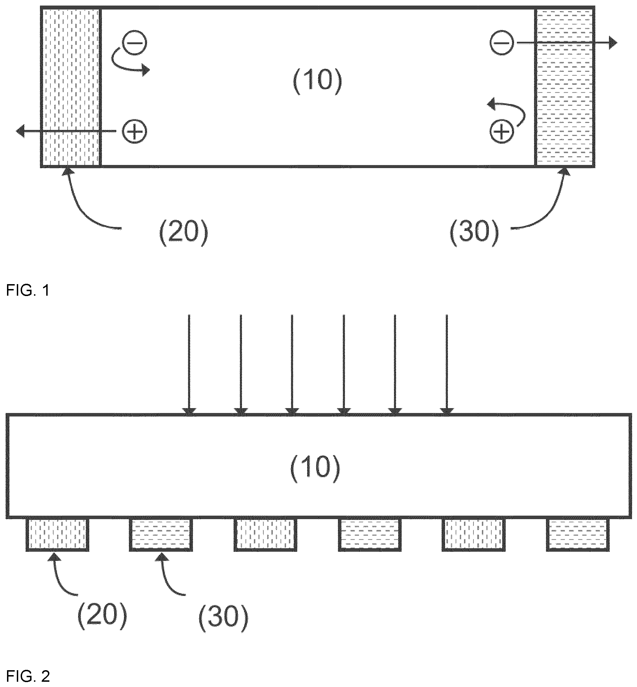

FIG.1 shows a schematic representation of the system herein disclosed. In particular, the system comprises a semiconductor (10) and two selective contacts, an electron transport layer (30) and a hole transport layer (20). By illuminating the semiconductor with photons with more energy than the gap of the semiconductor (10), electrons and holes are photogenerated and diffuse through the semiconductor (10). In the ETL filter (30), electrons will flow and the holes will be blocked, while in the HTL filter (20), the opposite behavior will take place.

FIG. 2 shows an embodiment of the system wherein a plurality of electron transport layers (30) and hole transport layers (20) are attached to the semiconductor and disposed consecutively and in an alternate manner. The incidence of the light is represented with a plurality of arrows directed onto the surface of the semiconductor (10). The selective contacts (20, 30) are in the opposite face of the semiconductor (10) layer. This specific way to distribute the layers is commonly known as interdigitated back contacts.

The semiconductor (10) might be covered with a passivated layer (40), the passivated layer being of a wide variety of materials as disclosed herein. The selective contacts (20, 30) might be attached to the passivated layer and therefore in contact with the semiconductor (10).

The plurality of selective contacts (20, 30) might be disposed on the surface of the semiconductor in a number of alternative ways.

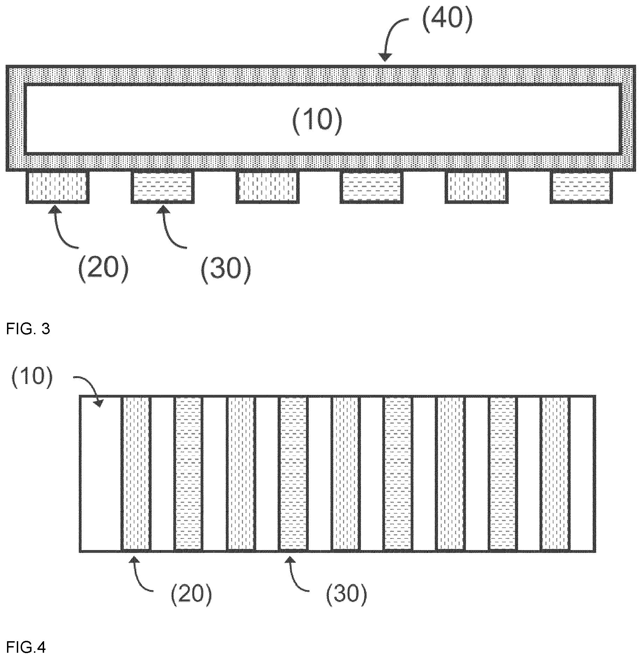

For instance, FIG. 4 shows a plurality of selective contacts (20, 30) disposed on the semiconductor (10), the selective contact layers alternating hole transport layers (20) and electron transport layers (30) and being disposed along the y-axis of the semiconductor (10).

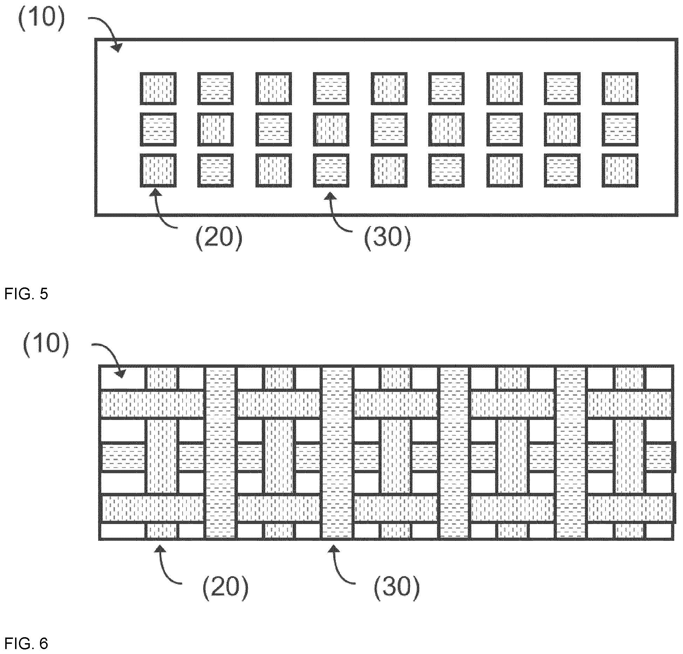

In other alternatives, a plurality of selective contacts (20, 30) are attached onto the surface of the semiconductor (10) in a two-dimensional alternate way. That is, hole transport layers (20) and hole transport layers (30) might be disposed alternatively in the x-axis and the y-axis of a semiconductor (10), as shown in FIG. 5.

Other alternatives of the system suitable for photocatalysis disclosed herein involves the presence of alternating and superimposed hole transport layers (20) and electron transport layers (30) on the semiconductor (10). As shown in FIG. 6, for example, the semiconductor (10) might be covered with a plurality of selective contacts (20, 30), the hole transport layers (20) disposed along the y-axis of the semiconductor (10) and the electron transport layers (30) disposed along the x-axis of the semiconductor (10). The selective contact layers (20, 30) might be overlapped between each other.

### EXAMPLES

### Synthesis of TiO₂ thin films by sol-gel method

All the used chemicals were obtained from Sigma-Aldrich and were used without further purification. Titanium (IV) propoxide was chosen as the sol-gel precursor. During the preparation an argon inert atmosphere was created in the mixing beaker to avoid the Titanium (IV) propoxide hydrolyzation. Any sol solution that presented hydrolyzation signs throughout its preparation must be discarded and start over. Typically, 5 g of precursor were added to a beaker and dissolved in 5 g of absolute ethanol. Later a magnetic stirrer at 100 rpm was used to constantly stir the solution along the whole synthesis. Then, 1 mL of hydrochloric acid (37 %) and 2 mL of water were added dropwise and very slowly to avoid hydrolyzation. Hydrochloric acid acts as a catalyst for the reaction. Afterwards the solution was agitated during 10 min and dissolved in 100 mL of absolute ethanol, followed by 15 min of further stirring. The resulting sol solution was ready to be used and can be preserved for two weeks in the fridge for future uses.

Silicon wafers covered with a thin film of alumina deposited by Atomic Layer Deposition were used as substrates for our titania thin films. Those were cut into squares of 2 cm × 2 cm. The alumina layer is used to electrically insulate the silicon from the titanium dioxide and increase the hydrophilicity of the substrate to ensure a good sol impregnation of the surface. Three drops of the sol solution were drop casted over the substrates and let dry at room temperature for 24 hours. Finally, the sample was calcined at 500 °C for four hours (initial heating ramp of 5 °C min⁻¹), for the purpose of burning out the gel into anatase films. Since this heat treatment resulted in cracked films, each sample was fabricated stacking 3 layers of titania to fill the cracks and cover all the substrate surface. The resulting film weighted around 2-3 mg and had a thickness of 1.5 µm.

Raman spectroscopy demonstrated that the titanium dioxide films synthesized by sol-gel method are mainly composed by anatase with a very small hint of rutile. Anatase is the most desirable phase because due to its indirect bandgap, it has been demonstrated that the charge carrier lifetime is higher than other crystalline phases of TiOz.

### Interdigitate front contact fabrication

Magnesium layers were deposited by vacuum evaporation in a bell jar inside a Leybolds Systems, UNIVEX 350G glovebox system. A vacuum of 10⁻⁵ mbar was achieved in the bell jar using a mechanical pump and a Leybolds Systems, Turbovac TMP 600C. Magnesium pellets were heated up to evaporation temperature using an Alcatel, HI2000 power supply. When the vacuum was achieved, we started heating up the Mg pellets until a stable deposition rate of 0.3-1 A/s was achieved (measured with a calibrated quartz crystal). As soon as the deposition rate stabilizes, we start the deposition aiming to deposit a magnesium layer of 10 nm. Microscope slides, aluminum foil, 0.3 mm Nylon wire and Kapton tape were used to draw the studied patterns over the TiOz. Once the deposition is completed the samples are stored in the nitrogen inert atmosphere of the glovebox until the gold nanoparticles are deposited. This it is done to avoid uncontrolled oxidation of the Mg.

Gold nanoparticles were deposited by drop casting 150 µL of 0.1125 M HAuCl₄ over the sample surface. The amount of gold corresponds to a 1:100 ratio in weight between the gold and titanium dioxide. To avoid any gold loss the drop casted samples were dried for 30 min at 50 °C. Then the sample was heated up to 300 °C (with a ramp of 5 °C every minute) for one hour to form and fix the gold nanoparticles on the surface of the sample.

### Sample characterization

Scanning electron microscopy (SEM) images were performed on a Zeiss Neon40 Crossbeam Station instrument at 5.0 kV equipped with a field emission source. The free software Fiji was used to measure the particle size of the samples. The structure of the TiOz sol-gel layer was observed by high-angle annular dark-field imaging (HAADS) in a scanning transmission electron microscope (STEM) FEI Titan (60-300 kV).

SEM indeed showed the cracked nature of the TiO2 film due to the high synthesis temperatures. SEM images were also used to measure the mean value of the gold nanoparticles diameter distribution, that was around 17 nm.

### Hydrogen production measurement

All experiments were carried out in a cylindrical glass-tube reactor with an inner diameter of 40 mm, and a height of 145 mm. The samples were placed right in the middle of the reactor such that the reactants would enter through the lower part of the reactor, and the products would leave from the upper part towards the gas chromatograph. The sample was positioned such that the selective contacts were always facing downwards (illuminated side) and silicon substrate free surface upwards.

A Dreschel bottle containing a mixture of liquid water and ethanol (9:1 molar) was used to obtain a gaseous flow of reactants. Argon was circulated through the Dreschel bottle with a flux of 20 mL/min dragging ethanol and water molecules in gaseous state towards the reactor.

The light source was placed at the bottom of the reactor facing upwards towards the titania layer of the sample. The light sourced consisted in a Solar Simulator equipped with a Newport 66142 Mercury-Xenon arc lamp (Ushio UXM-52MD) working at 500W. The emitted light passed through a water cooled 6117 Newport Liquid filter (water filter simulating the atmosphere) and 77776 Newport Focusing Assembly that focused the light beam into a single branch optic fiber that introduces the light into the reactor. This resulted in an irradiance in the UV-A range (absorption range of TiO₂) of 72 mW cm⁻² over the sample surface.

Gaseous products were monitored on-line every 4 min with a gas chromatograph (Micro-GC Agilent 490) employing three columns: Stabilwax, MS 5 Å and Plot U. Calibration curves were obtained in the concentration range of each product using standard gas mixtures provided by certified mass flow controllers (Bronkhorst) and following standard procedures. Only major productions of hydrogen and acetaldehyde were observed in our reactor showing that the dominant photoreaction was the ethanol dehydrogenation (CH₃CH₂OH → CH₃CHO + H₂). However, hydrogen and acetaldehyde where not detected in a 1:1 ratio because part of the photoproduced hydrogen underwent recombination with residual oxygen contained in the photoreactor, altering the results of samples that achieved low hydrogen production rates. For high production rates the acetaldehyde condensed in the pipe system, and it was filtered out before entering the gas chromatograph to avoid column damage. Some other photoreforming subproducts where detected in negligible amounts in front the hydrogen and acetaldehyde productions.

### Results

Using the different deposition techniques and transport layers shown in the experimental section, several photocatalyst systems were obtained. Those can be classified in four categories: reference samples, samples only containing TiO₂ and magnesium, interdigitated samples with the gold nanoparticles (NPs) deposited before the magnesium and interdigitated samples with the gold NPs deposited after the Mg evaporation. They are summarized in Table 1 below:

**Table 1. Classification and composition of the photocatalytic system**

| *Sample family* | *Sample name* | *Electron transport layer* | *Hole transport layer* |
|---|---|---|---|
| **Reference Samples** | TiO₂ blank | - | - |
| | TO₂/Au | - | Gold NPs |
| **TiO₂/Mg Only Samples** | TiO₂/Mg (fu II) | Magnesium film | - |
| | TiO₂/Mg(half) | Magnesium film | - |
| **TiO₂/Au NP + Mg(after)** | TO₂/Au + Mg(half) | Magnesium film | Gold NPs |

| **Samples** | | | |
|---|---|---|---|
| **TiO₂/Mg(before) + Au NP Samples** | TiO₂/Mg(full) + Au | Magnesium film | Gold NPs |
| | TiO₂/Mg(half) + Au | Magnesium film | Gold NPs |
| | TiO₂/Mg (thick strips) + Au | Magnesium film | Gold NPs |
| | TiO₂/Mg (thin strips) + Au | Magnesium film | Gold NPs |

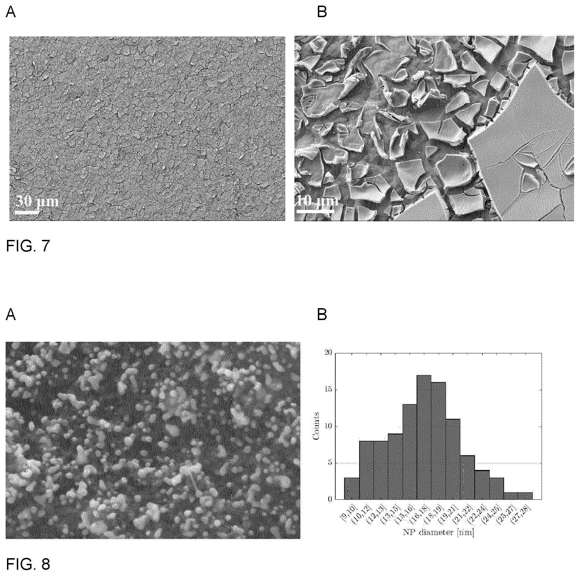

Scanning electronic microscopy indeed showed the cracked nature of the TiOz film due to the high synthesis temperatures, as shown in FIG. 7. SEM images were also used to measure the mean value of the gold nanoparticles diameter distribution, that was around 17 nm, as shown in FIG. 8.

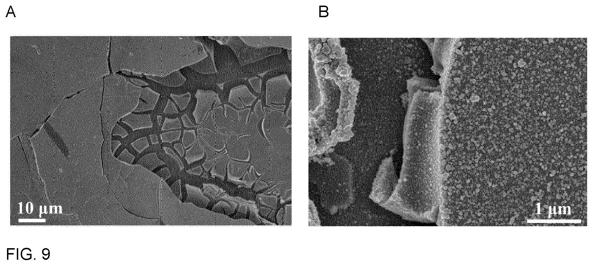

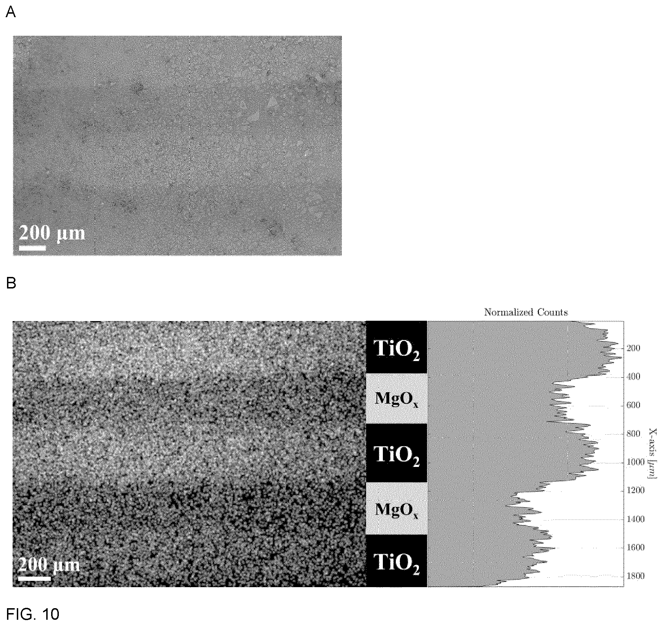

The Magnesium film over the anatase also presents several cracks when inspected by SEM, as shown in FIG. 9A. Zooming in the surfaces and cracks gold nanoparticles can be observed (FIG. 9B). The diameter distribution of the NP's seems to be composed by three main populations: A cluster population with diameters from 30 nm to around 150 nm, a nanoparticle population of around 10 nm (mean diameter without the clusters) and a large amount of very small NPs of 1-5 nm (mode of the distribution). The last two populations can be only studied precisely if the larger clusters are filtered. Apart from a size difference, a NP density difference of the gold over Mg than the TiO₂ in the most interdigitated samples, TiO₂/Mg (thin strips) + Au, was noticed. To study this, SEM and EDX imaging of the sample was used (FIG. 10). The distribution over the titanium dioxide is much denser that the one present over the magnesium thin film. Nevertheless, there are not large gold deprived areas on the magnesium surface. Major differences between the gold nanoparticles depending on the underlaying material have been spotted. Those could be used in future works to tune the NP amount and size in a more controlled manner.

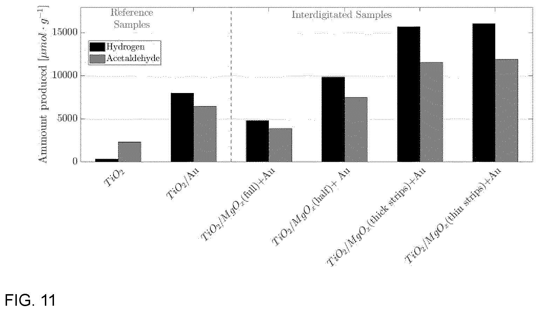

In FIG. 11 the hydrogen and acetaldehyde production for all the samples except the stripped ones is shown. All the samples that had the Mg deposited as their last step, were storage in a nitrogen atmosphere until the very moment of the hydrogen generation experiment. A huge gain in performance between the pristine TiO₂ sample and the TiO₂/Au is observed. The sample with titanium dioxide and gold produces almost 23 times the amount of hydrogen produced by the bare TiO₂ in the first two hours of illumination. This improvement in the hydrogen production is the sum of several factors. Since the gold work function (ΦAu=5.3 eV) is much higher than titanium dioxide work function (ΦTiO₂=4.4 eV) when the Fermi levels of the NPs and the anatase equilibrate, charge will accumulate around the interface. This depletion layer will result in an upwards bend on the anatase bands that will block the electron transfer from the TiO₂ to the Au and favor the escape of holes to the metal (i.e., an HTL). The addition of a Hole Transport Layer to the TiO₂ is especially important since the synthesized anatase is a highly n-doped semiconductor, therefore by depositing an HTL the minority carrier extraction is improved. Moreover, due to the nanometric size of the metallic nanoparticles, those can present Localized Surface Plasmonic Resonance (LSPR). In consequence, the gold NPs absorb light in the visible range that is used to generate hot carrier pairs and a temperature increase. The plasmonic absorption produces highly energetic electron-hole pairs that are injected into the TiO₂ and, ultimately involve in the reaction. Hence, a wider part of the spectra of the incident light is absorbed because pristine anatase can only absorb in the UV range. A temperature increase results in an acceleration of the reaction rate through the Arrhenius formula. The temperature uplift will also accelerate the recombination rate in the anatase, however, the working temperature of the samples is low enough (T < 75 °C) that the reaction rate increase overcome the recombination losses.

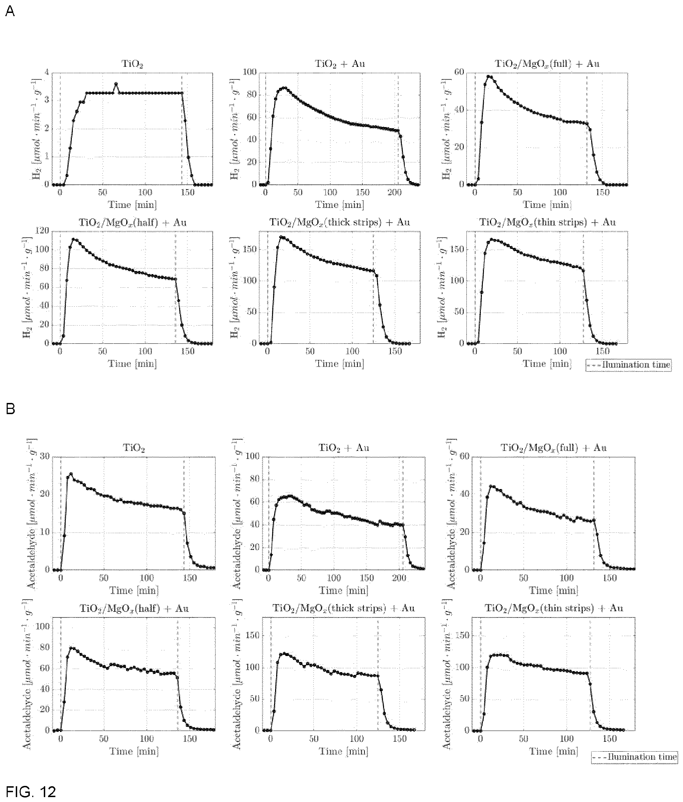

If the two full covered samples are compared, TiO₂/Mg(full) has a much lower H₂ production than the TiO₂/Mg(full)+Au and even the TiOz blank sample. This difference can also be seen in the acetaldehyde production but with much smaller relative differences (FIG. 12). Half covered samples also exhibit the same behavior, samples without gold result in a small H₂ production while ones containing Mg and gold already outperform the reference TiO₂/Au sample. This can be explained by a well-known phenomenon seen in photocatalysis and photoelectrocatalysis, charge transfer efficiency in the catalyst-electrolyte interface. Usually charge carriers cannot escape the solid photocatalyst and interact with adsorbed reactants/electrolyte at their surface without a mediating agent or efficient active site structure. Some of the most used elements for this charge interchange mediation are noble metals nanoparticles (i.e. Gold). Hence, it is assumed that MgO works as the intended ETL as due to its molecular dipolar moment that extract the electrons, nevertheless, gold NPs are needed to ensure a good charge transfer from the magnesium film to the reactants/electrolyte.

Lastly, the order of the cocatalyst deposition affects the hydrogen evolution. If the two samples with half the area covered with Mg that also contain Au NPs are compared, there is a different behavior. The sample with gold deposited before the magnesium has a much larger production rate decrease after the initial peak of production than the TiO₂/Mg(half)+Au sample. This can be easily explained because in the TiO₂/Au+Mg(half) sample, the Au NPs are covered or partially covered by the magnesium layer. Thus, the gold is simultaneously in contact with the titanium dioxide and the magnesium. This fact will increase the recombination rate because gold will catch holes from the TiOz and due to the good metal-metal contact with the Mg those will recombine with the electrons coming from the ETL. Instead in the sample where the gold was deposit as the last step, the gold will only be in contact with one of the materials, so no extra charge recombination is expected. The same tendency can be noticed with regard to the acetaldehyde production.

## Claims

1. A system suitable for photocatalysis comprising a semiconductor (10) and selective contacts (20, 30), the selective contacts (20, 30) being at least two, wherein
the selective contacts (20, 30) are attached to the semiconductor (10); and
the selective contacts (20, 30) comprise an electron transport layer (30) and a hole transport layer (20).

2. The system according to claim 1, wherein the electron transport layer (30) and the hole transport layer (20) are in opposite sides of the semiconductor (10) to which they are attached.

3. The system according to claim 1, wherein the electron transport layer (30) and the hole transport layer (20) are attached on the same side of the semiconductor (10) to which they are attached.

4. The system according to any one of claims 1 to 3, wherein the selective contacts (20, 30) are a plurality of selective contacts (20, 30) comprising a combination of electron transport layers (30) and a combination of hole transport layers (20).

5. The system according to claim 4, wherein the selective contacts (20, 30) are disposed consecutively and alternating electron transport layers (30) and hole transport layers (20).

6. The system according to any one of claims 1 to 5, wherein the semiconductor (10) is made of titanium dioxide or bismuth vanadate.

7. The system according to any one of claims 1 to 6, wherein the electron transport layer (30) is made of magnesium oxide, zinc oxide or n-type doped amorphous silicon.

8. The system according to any one of claims 1 to 7, wherein the hole transport layer (20) is made of platinum, gold, copper or transition-metal oxides, the transition metal oxide being preferably selected from the group consisting of molybdenum, vanadium and combinations thereof.

9. The system according to any one of claims 1 to 8, further comprising a passivation layer (40), the layer preferably being made of molecular dipoles, the molecular dipoles being thin-film molecular dipoles and/or selected from the group of molecules comprising amino groups.

10. Method to produce a system suitable for photocatalysis comprising the steps of:
providing a sol-gel precursor of a semiconductor (10);
dissolving the sol-gel precursor in a polar solvent;
adding acid to the dissolution and stirring the dissolution to obtain a sol of the semiconductor (10);
depositing the semiconductor (10) in a suitable substrate;
submitting the deposited semiconductor (10) to a temperature of at least 300 °C for at least 1 hour to obtain a thin film of semiconductor (10); and
depositing on the semiconductor (10) an electron transport layer (30) and/or a hole transport layer (20).

11. The method according to claim 10, wherein the semiconductor (10) is titanium dioxide.

12. The method according to claim 10 or 11, wherein the polar solvent is ethanol and/or the acid is hydrochloric acid.

13. The method according to any one of claims 10 to 12, wherein the suitable substrate is a silicon wafer covered with a thin film of alumina.

14. The method according to any one of claims 10 to 13, wherein the electron transport layer (30) is a magnesium oxide film and/or the hole transport layer (20) is made of gold.

15. A method to obtain hydrogen from water or alcohol comprising the steps of contacting the system as defined in claims 1 to 9 with water and/or alcohol; and irradiating the system as defined in claims 1 to 9 with light.
